# EUROPÄISCHE PATENTSCHRIFT

(11) **EP 0 726 134 B1**
(45) Veröffentlichungstag und Bekanntmachung des Hinweises auf die Patenterteilung: **02.12.1998**
(21) Anmeldenummer: 96101460.2
(22) Anmeldetag: 02.02.1996
(51) Int. Cl.: B29C 47/06

(54) **Verfahren und Anlage zur Herstellung eines Mehrschicht-Rohres aus thermoplastischem Kunststoff, insbesondere Polyolefin**
Method and apparatus for producing a thermoplastic multi layer pipe, especially from polyolefin
Procédé et appareil pour la production d'une conduite multicouche en thermoplastique, notamment polyoléfine

(30) Priorität: 13.02.1995 DE 19504501
(43) Veröffentlichungstag der Anmeldung: 14.08.1996
(73) Patentinhaber: Hegler, Wilhelm, D-97688 Bad Kissingen (DE)
(72) Erfinder: Hegler, Ralph Peter, Dr., D-97688 Bad Kissingen (DE); Hegler, Wilhelm, D-97688 Bad Kissingen (DE)
(74) Vertreter: Rau, Manfred, Dr. Dipl.-Ing.

(56) Entgegenhaltungen:
- EP-A- 0 543 243
- EP-A- 0 600 214
- DE-A- 2 042 031
- FR-A- 1 486 473
- GB-A- 1 148 277
- US-A- 4 377 545
- PATENT ABSTRACTS OF JAPAN vol. 008, no. 120 (M-300), 6.Juni 1984 & JP-A-59 026224 (HITACHI DENSEN KK), 10.Februar 1984,

## Beschreibung

Die Erfindung betrifft ein Verfahren zur Herstellung eines Mehrschicht-Rohres aus thermoplastischem Kunststoff, insbesondere Polyolefin, nach dem Oberbegriff des Anspruchs 1 und einer Anlage zur Durchführung des Verfahrens nach dem Oberbegriff des Anspruches 8.

Mehrschicht-Rohre, und zwar insbesondere Dreischicht-Rohre sind aus der DE 17 04 718 B2 (entsprechend US-PS 3 538 209 und US-PS 3 677 676) bekannt.

Aus der DE-A-2 042 031 sind ein Verfahren und eine Anlage der gattungsgemäßen Art bekannt,
wobei ein mit einem äußeren Wellrohr versehenes Verbund-Rohr in der üblichen Weise hergestellt wird. Dieses Verbund-Rohr wird in einem Coextrusionskopf mit einem Schlauch umspritzt, der in einer nachgeordneten Außenkalibriervorrichtung mittels Vakuum kalibriert wird. Auf derartige Weise hergestellte Dreischicht-Rohre können als Schutzrohre, und zwar insbesondere als Kabelschutzrohre und als Abwasserrohre, eingesetzt werden, wenn sie von innen keinem nennenswerten Druck ausgesetzt werden. Das Problem bei dieser Art der Herstellung von Mehrschicht-Rohren besteht darin, daß zwischen dem nachträglich aufgebrachten Schlauch zur Erzeugung eines Außenrohres bzw. einer Außenhaut keine zuverlässige Verschweißung zwischen diesem Schlauch und dem bereits vorher hergestellten mit einer Außen-Profilierung versehenen Rohr erreicht wird. Insbesondere beim Einsatz von Polyolefinen, wie beispielsweise Polyethylen, kann das vorher hergestellte mit einer Außen-Profilierung versehene Rohr beträchtliche Toleranzen im Außendurchmesser aufweisen. Es sind daher keine definierten Verhältnisse bei der bekannten Außenkalibrierung mittels Vakuum gegeben.

Der Erfindung liegt daher die Aufgabe zugrunde, ein Verfahren und eine Anlage der gattungsgemäßen Art jeweils derart weiterzubilden, daß sie gegenüber Außendurchmessertoleranzen des mit einem Schlauch zu überziehenden Rohres unempfindlich sind.

Diese Aufgabe wird bei einem Verfahren der gattungsgemäßen Art durch die Merkmale im Kennzeichnungsteil des Anspruches 1 und bei einer Anlage der gattungsgemäßen Art durch die Merkmale im Kennzeichnungsteil des Anspruches 8 gelöst.

Der Kern der Erfindung liegt darin, daß dafür Sorge getragen wird, daß die mit dem nachträglich durch Koextrusion aufgebrachten Schlauch zu verschweißenden Außenflächen des zuvor hergestellten Rohres auf Schweißtemperatur gebracht werden und daß der Schlauch dadurch gegen diese Außenflächen gepreßt wird, daß eine von außen auf den Schlauch wirkende Druckdifferenz diesen gegen die Außenflächen des Rohres preßt. Diese Druckdifferenz bleibt beim späteren Abkühlen nicht nur erhalten, sondern vergrößert sich noch, so daß sich gezeigt hat, daß ein Abziehen oder Abreißen dieser in der Regel glatten Außenhaut des fertigen Mehrschicht-Rohres nur sehr schwer möglich ist. Der Vorteil des auf die erfindungsgemäße Art hergestellten Mehrschicht-Rohres besteht darin, daß bei einer Gewichtserhöhung von lediglich 20 bis 30% eine Verdoppelung der Steifigkeit des Rohres erreicht wird. Dies gilt insbesondere für mit einem solchen Außenrohr überzogene Verbund-Rohre. Da ein solches Mehrschicht-Rohr eine glatte Außenfläche aufweist, kann es beim Transport und bei der Installation in einfacher Weise gehandhabt werden. Das insbesondere bei Rippen-Rohren auftretende Problem, daß es bei der Installation nicht über den Boden geschoben werden kann, da sich die Rippen in den Boden graben, besteht nicht mehr. Da eine glatte Außenhaut vorliegt, können Abzweigungen in einfacher Weise hergestellt werden. Durch die zusätzliche Außenhaut ist eine erhöhte Sicherheit gegen Undichtheiten gegeben.

Einzelheiten der Erfindung ergeben sich aus der nachfolgenden Beschreibung von Ausführungsbeispielen anhand der Zeichnung. Es zeigt
- Fig. 1: eine Anlage zur Herstellung eines Dreischicht-Rohres in schematischer Darstellung,
- Fig. 2: einen Längsschnitt durch einen Coextrusionskopf aus der Anlage nach Fig. 1,
- Fig. 3: einen Längsschnitt durch zwei mittels einer Muffe miteinander verbundene Dreischicht-Rohre und
- Fig. 4: die Herstellung eines Mehrschicht-Rohres auf der Basis eines Rippen-Rohres.

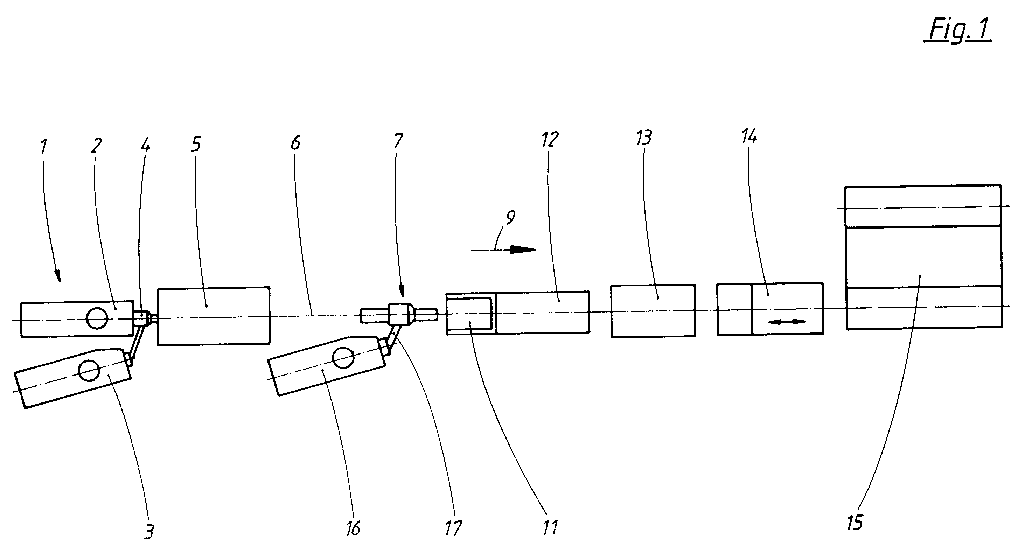

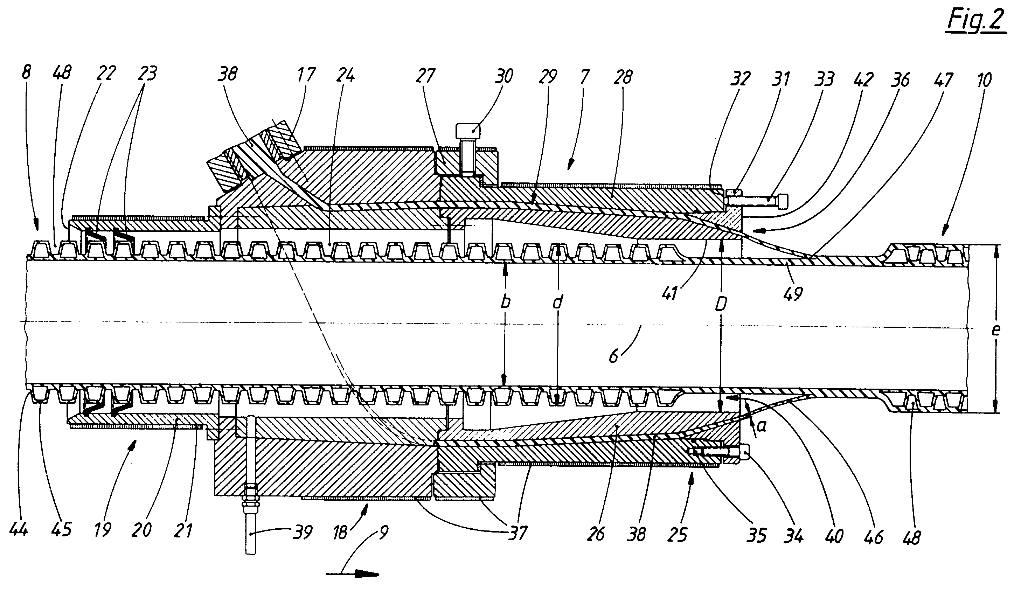

Fig. 1 zeigt eine Anlage zur Herstellung von Mehrschicht-Rohren, insbesondere Dreischicht-Rohren. In der Zeichnung links ist eine Extrusionsanlage 1 dargestellt, die einen 1. Extruder 2 und einen 2. Extruder 3 aufweist, die aus einem gemeinsamen Extrusionskopf 4 zwei zueinander konzentrische Schläuche aus thermoplastischem Kunststoff, insbesondere Polyolefin, extrudieren, die in einer nachgeordneten Kalibrier-Vorrichtung 5 zu einem Verbund-Rohr geformt werden. Ein derartiger Extrusionskopf 4 ist beispielsweise aus der DE 17 04 718 B2 (entsprechend US 3 677 676) bekannt. Eine solche Kalibrier-Vorrichtung 5 ist ebenfalls bekannt, und zwar beispielsweise aus der EP 0 065 729 B1 (entsprechend US 4 492 551). Wenn nur ein sogenanntes Rippen-Rohr hergestellt werden soll, dann muß nur ein Extruder vorgesehen sein. Eine entsprechende Kalibrier-Vorrichtung hierfür ist beispielsweise aus der EP 0 301 189 B1 (entsprechend US 4 900 503) bekannt. Das Rohr verläßt die Kalibrier-Vorrichtung 5 in so weit abgekühltem Zustand, daß es formstabil ist. Koaxial zu der Mittel-Längs-Achse 6 der Kalibrier-Vorrichtung 5 ist ein Coextrusionskopf 7 angeordnet, in den das Verbund-Rohr 8 in Produktionsrichtung 9 eintritt. Dieser Coextrusionskopf 7 ist in Fig. 2 näher dargestellt, worauf weiter unten eingegangen wird. In dem Coextrusionskopf 7 wird um das Rohr 8 ein ein Außenrohr bzw. eine Außenhaut bildender Schlauch geformt. Das so gebildete Mehrschicht-Rohr 10 tritt anschließend zuerst in ein Luft-Kühlbad 11 und anschließend in ein Wasser-Kühlbad 12 ein. Der Abtransport des Mehrschicht-Rohres 10 in Produktionsrichtung 9 erfolgt mittels einer Abzug-Vorrichtung 13, die in bekannter Weise als sogenannter Band-oder Raupenabzug ausgebildet sein kann. Hinter dieser Abzug-Vorrichtung 13 kann in Produktionsrichtung 9 eine Trennstation 14, beispielsweise in Form einer Säge, angeordnet sein, der wiederum eine sogenannte Muffmaschine 15 nachgeordnet sein kann, in der an einzelne Rohrabschnitte Muffen angeformt werden.

Dem Coextrusionskopf 7 ist ein 3. Extruder 16 vorgeordnet, der mit einem Schmelze-Rohr 17 an einen im wesentlichen ringförmigen Grundkörper 18 des Coextrusionskopfs 7 angeschlossen ist. Auf der der Kalibrier-Vorrichtung 5 zugewandten Seite also - in Produktionsrichtung 9 gesehen - vor dem Grundkörper 18, ist an diesem eine Vorheiz-Einrichtung 19 angebracht, die aus einem dünnwandigen rohrförmigen Träger 20 mit guter Wärmeleitfähigkeit und einer auf diesem Träger 20 angebrachten Heizung 21, beispielsweise in Form eines Heizbandes, besteht. Auf der Rohr-Eintrittsseite 22, also am - bezogen auf die Produktionsrichtung 9 - vorderen Ende der Vorheiz-Einrichtung 19 ist an der Innenseite des Trägers 20 eine Dichtungsanordnung 23 vorgesehen, die den Innenraum 24 des Coextrusionskopfes 7 auf der Rohr-Eintrittsseite 22 abdichtet. Diese Dichtungsanordnung 23 ist derart ausgebildet, daß sie an der Außenseite des Rohres 8 anliegt und große Außen-Durchmesseränderungen des Rohres 8 ausgleichen kann.

An der anderen Seite, also am in Produktionsrichtung 9 hinteren Ende, des Grundkörpers 18 ist eine Coextrusions-Düse 25 angebracht. An dem Grundkörper 18 ist ein Innen-Düsenrohr 26 mittels nur angedeuteter Schrauben befestigt. Weiterhin ist am Grundkörper 18 mittels ebenfalls nur angedeuteter Schrauben ein äußerer Justierring 27 angebracht. Das Innen-Düsenrohr 26 wird von einem Außen-Düsenrohr 28 umgeben, wobei zwischen den Düsenrohren 26 und 28 ein etwa ringförmiger Schmelze-Kanal 29 begrenzt wird.

Im Justierring 27 sind sich radial zur Achse 6 erstreckende Justierschrauben 30 gehalten, die gegen das Außen-Düsenrohr 28 anliegen. Mittels dieser Justierschrauben 30 wird das Außen-Düsenrohr 28 zentriert, wodurch der Schmelze-Kanal 29 exakt den gewünschten Querschnittsverlauf erhält. An der in Produktionsrichtung 9 hinteren Stirnseite 32 der Düse 25 weist das Innen-Düsenrohr 26 einen Ringbund 31 auf, in dem gegen die zugewandte Stirnseite 32 des Außen-Düsenrohres 28 anliegende Justier-Druckschrauben 33 gehalten sind. In diesem Ringbund 31 sind weiterhin Justier-Zugschrauben 34 gehalten, die in Gewindebohrungen 35 des Außen-Düsenrohres 28 im Bereich seiner Stirnseite 32 eingreifen. Durch die Justier-Druckschrauben 33 und die Justier-Zugschrauben 34 kann das Außen-Düsenrohr 28 in Richtung der Achse 6 verstellt werden, gegenüber dieser aber auch geringfügig verkantet werden. Die Weite a der Düsen-Austrittsöffnung 36 kann damit eingestellt werden, und zwar auch in der Weise, daß diese Weite a über dem Umfang variiert. Im übrigen ist die Art der Justierung einer Düse im einzelnen in der EP 0 509 216 A3 (entsprechend US-PS 5 346 384) dargestellt und beschrieben, worauf verwiesen werden darf.

Der Schmelze-Kanal 29 ist an das Schmelze-Rohr 17 angeschlossen. Der Grundkörper 18, der Justierring 27 und das Außen-Düsenrohr 28 sind mit Schmelze-Heizungen 37 umgeben, die die Schmelze 38 auf der notwendigen Extrudier-Temperatur halten.

Am Grundkörper 18 ist ein Teilvakuum-Anschluß 39 angebracht, der in den Innenraum 24 des Coextrusionskopfes 7 mündet. Dieser Innenraum 24 erstreckt sich über die volle Länge des Coextrusionskopfes 7. Dieser im wesentlichen rohrförmige Innenraum 24 weist an der Rohr-Austrittsseite 40, also an seinem in Produktionsrichtung 9 hinteren Ende, einen zylindrischen Abschnitt 41 auf, dessen Innendurchmesser D größer ist als der größte Außendurchmesser d des Rohres 8. Die Düsen-Austrittsöffnung 36 ist in der in Produktionsrichtung 9 hinteren Stirnseite 42 der Coextrusions-Düse 25 ausgebildet.

Die Arbeitsweise ist wie folgt:

Von der Extrusionsanlage 1 mit der Kalibrier-Vorrichtung 5 kommt in Produktionsrichtung 9 ein Verbund-Rohr 8 zum Coextrusionskopf 7. Dieses Verbund-Rohr 8 besteht in der üblichen Weise aus einem glatten Innenrohr 43 und einem äußeren Wellrohr 44. Dieses Wellrohr 44 weist ringförmige oder in besonderen Anwendungsfällen auch schraubenlinienförmig verlaufende zylindrische Außenflächen 45 auf. Gegen diese zylindrische Außenflächen 45 liegt die Dichtungsanordnung 23 an, und zwar in der Weise, daß sie immer mindestens gegen eine Außenfläche 45 anliegt. Dadurch ist der Innenraum 24 gegenüber der Atmosphäre in diesem Bereich abgedichtet.

Insbesondere die Außenflächen 45 werden durch die Vorheiz-Einrichtung 19 auf eine Temperatur aufgeheizt, die zum Verschweißen mit schweißbarem Kunststoff notwendig ist. In Einzelfällen kann es notwendig sein, daß die Vorheiz-Einrichtung 19 nicht notwendig ist, da die vom Coextrusionskopf 7 auf das Verbund-Rohr 8 abgegebene Wärme ausreichend sein kann, insbesondere die Außenflächen 45 auf eine zum Verschweißen ausreichende Temperatur zu bringen. Das Rohr 8 durchläuft den Innenraum 24 des Coextrusionskopfes 7, der über den Teilvakuum-Anschluß 39 mit Teilvakuum, also mit einem Druck unterhalb von Atmosphärendruck, beaufschlagt wird. Aus der Düsen-Austrittsöffnung 36 der Coextrusions-Düse 25 wird die Schmelze 38 aus thermoplastischem Kunststoff, insbesondere Polyolefin, in Form eines Schlauches 46 auf das Rohr 8 extrudiert, und zwar - bezogen auf die Produktionsrichtung 9 - unmittelbar hinter der Düse 25. Der Schlauch 46 wird wegen des Teilvakuums im Innenraum 24 des Coextrusionskopfes 7, das sich bis in den Berührungsbereich 47 zwischen dem Schlauch 46 und dem Rohr 8 erstreckt, gegen die zylindrischen Außenflächen 45 des Wellrohres 44 gepreßt. Der Schlauch 46 hat eine Temperatur, die noch eine Verschweißung ermöglicht. Die Außenflächen 45 sind - wie erwähnt - auf eine entsprechende Temperatur aufgeheizt. Da zudem auf den Schlauch 46 von außen ein entsprechender Luftdruck wirkt, erfolgt eine zuverlässige und feste Verschweißung zwischen dem Schlauch 46 und den Außenflächen 45. Da in den Wellentälern 48 des Wellrohres 44 das erwähnte Teilvakuum herrscht, kann es vorkommen, daß der Schlauch 46 sich jeweils zwischen den Außenflächen 45 leicht einbeult.

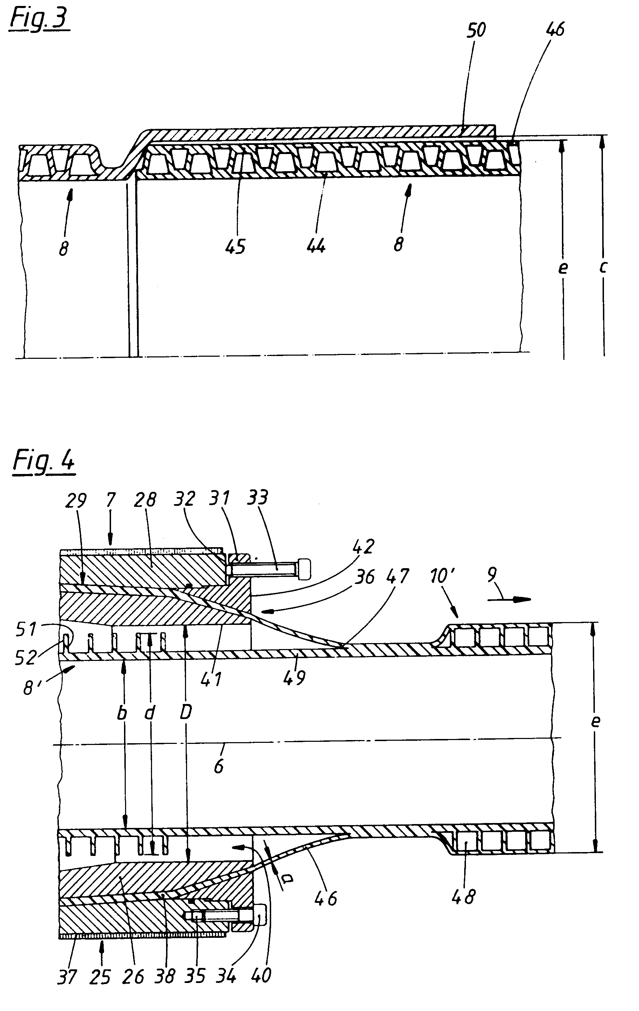

Wenn das Rohr 8 - wie in Fig. 2 rechts dargestellt - einen glattwandigen Abschnitt 49 im Wellrohr 44 aufweist, dann legt sich der Schlauch 46 im wesentlichen ganzflächig gegen diesen glattwandigen Abschnitt 49 und wird unter dem erwähnten Druck im wesentlichen ganzflächig mit diesem verschweißt. Die Dichtungsanordnung 23 ist so ausgebildet, daß sie auch beim Einlauf des glattwandigen Abschnitts 49 auf der Rohr-Eintrittsseite 22 in den Coextrusionskopf 7 ausreichend abdichtet. Im übrigen kann durch entsprechende Auslegung der nicht dargestellten Teilvakuum-Quelle ein hierbei auftretender Druckanstieg im Innenraum 24 unterbunden werden. Die Herstellung eines solchen glattwandigen Abschnitts 49, dessen Innendurchmesser b dem Innendurchmesser b des Rohres 8 entspricht, ist beispielsweise aus der EP 0 600 214 A1 (entsprechend US Ser. No. 08/154 855) bekannt. Auch das Herstellen eines Verbund-Rohres 8 mit einem als Muffe 50 ausgebildeten glattwandigen Abschnitt, wie er in Fig. 3 dargestellt ist, ist aus dieser Veröffentlichung bekannt. Auch in diesem Fall wird der Schlauch 46 über diesen als Muffe 50 ausgebildeten glattwandigen Abschnitt extrudiert und mit diesem verschweißt. Der Innendurchmesser c einer solchen Muffe 50 ist geringfügig größer als der Außendurchmesser e des in der geschilderten Weise hergestellten Mehrschicht-Rohres 10, bei dem es sich im geschilderten Fall um ein Dreischicht-Rohr 10 handelt.

Eine solche Muffe 50 kann aber auch nach dem Zerschneiden des Mehrschicht-Rohres 10 mittels der Trennstation 14 in der nachgeordneten Muffmaschine 15 erfolgen. In diesem Fall wird der mit dem Schlauch 46 überzogene glattwandige Abschnitt 49 in bekannter Weise aufgeheizt und zu einer Muffe 50 aufgeweitet. Fig. 3 zeigt auch wie ein Mehrschicht-Rohr 10 mit einem benachbarten Rohr 10 mittels einer solchen angeformten Muffe 50 verbunden wird.

Anstelle eines Verbund-Rohres 8 kann jedes andere mit einer Außenprofilierung, d.h. mit strukturierten Wand-Querschnitten versehene Rohr gleichermaßen mit einer zusätzlichen Außenhaut versehen werden, die durch den aufextrudierten Schlauch 46 gebildet wird. In Fig. 4 ist dargestellt, wie ein in einer entsprechend ausgebildeten Extrusionsanlage und einer entsprechend ausgebildeten Kalibrier-Vorrichtung hergestelltes Rippen-Rohr 8' mit einem solchen Schlauch 46 überzogen wird, der sich nur auf die radial außenliegenden, auf Schweißtemperatur aufgeheizten Außenflächen 51 der radial abstehenden Rippen 52 legt und mit diesen verschweißt wird. Auf diese Weise wird als Mehrschicht-Rohr 10' ein Zweischicht-Rohr geformt. Auch bei diesem Rippen-Rohr 8' kann ein glattwandiger Abschnitt 49' mit dem Schlauch 46 überzogen werden. Dieser überzogene Abschnitt 49' dient entweder als Spitzende oder wird zu einer Muffe aufgeweitet.

Die eingesetzten thermoplastischen Kunststoffe müssen nicht immer identisch sein; entscheidend ist, daß sie miteinander verschweißbar sind. Insbesondere kommen hierfür Polyolefine in Betracht, wobei Polyethylen mit Polyethylen oder Polyethylen mit Polypropylen verschweißt werden kann.

## Patentansprüche

1. Verfahren zur Herstellung eines Mehrschicht-Rohres (10) aus thermoplastischem Kunststoff, insbesondere Polyolefin, mit folgenden Verfahrensschritten:
- Herstellung eines mit einer Außen-Profilierung versehenen Rohres (8, 8') in einer Produktionsrichtung (9);
- Koextrudieren eines Schlauches (46) aus Kunststoff auf die Außenflächen (45, 51) der Außen-Profilierung des Rohres (8, 8');
- Verschweißen des Schlauches (46) mit den Außenflächen (45, 51); und
- Abkühlen des Mehrschicht-Rohres (10, 10'),
dadurch gekennzeichnet,
daß vor dem Koextrudieren eines Schlauches (46) aus Kunststoff auf die Außenflächen (45, 51) der Außen-Profilierung des Rohres (8, 8') mindestens die Außenflächen (45, 51) der Außen-Profilierung auf Schweißtemperatur aufgeheizt werden,
daß die Außenseite des Rohres (8, 8') mit - bezogen auf Umgebungsdruck - Teilvakuum beaufschlagt wird und
daß das Verschweißen des Schlauches (46) mit den Außenflächen (45, 51) unter dem Differenzdruck zwischen Umgebungsdruck und Teilvakuum erfolgt.

2. Verfahren nach Anspruch 1, dadurch gekennzeichnet, daß das Rohr (8, 8') zwischen Abschnitten mit Außen-Profilierung zumindest überwiegend glattwandige Abschnitte (49, 49') aufweist und daß der Schlauch (46) mit diesen Abschnitten (49, 49') im wesentlichen ganzflächig verschweißt wird.

3. Verfahren nach Anspruch 1 oder 2, dadurch gekennzeichnet, daß ein Verbund-Rohr (8) mit einem glatten Innenrohr (43) und einem mit diesem verschweißten äußeren Wellrohr (44) hergestellt und der Schlauch (46) mit den Außenflächen (45) des Wellrohres (44) verschweißt wird.

4. Verfahren nach Anspruch 1 oder 2, dadurch gekennzeichnet, daß ein Rippen-Rohr (8') mit radial nach außen abstehenden Rippen (52) hergestellt und der Schlauch (46) mit den radial außenliegenden Außenflächen (51) der Rippen (52) verschweißt wird.

5. Verfahren nach einem der Ansprüche 1 bis 4, dadurch gekennzeichnet, daß das Mehrschicht-Rohr (10, 10') mit Kühlluft gekühlt wird.

6. Verfahren nach einem der Ansprüche 1 bis 5, dadurch gekennzeichnet, daß das Mehrschicht-Rohr (10, 10') mit Kühlwasser gekühlt wird.

7. Verfahren nach einem der Ansprüche 2 bis 6, dadurch gekennzeichnet, daß ein glattwandiger Abschnitt (49, 49') zu einer Muffe (50) aufgeweitet wird.

8. Anlage zur Herstellung eines Mehrschicht-Rohres nach dem Verfahren nach einem der Ansprüche 1 bis 7, mit folgenden Merkmalen:
- eine Extrusionsanlage (1) zur Extrusion mindestens eines Schlauches (46) in einer Produktionsrichtung (9);
- eine Kalibrier-Vorrichtung (5) zum Formen eines Rohres (8, 8') mit einer Außen-Profilierung; und
- ein Koextrusionskopf (7) mit einem Extruder (16) zum Koextrudieren eines Schlauches (46) um das Rohr (8, 8'),
dadurch gekennzeichnet
daß eine Vorheiz-Einrichtung (19) zum Aufheizen der Außenflächen (45, 51) der Außen-Profilierung auf Schweißtemperatur vorgesehen ist und daß der Koextrusionskopf (7) einen Teilvakuum-Anschluß (39) aufweist.

9. Anlage nach Anspruch 8, dadurch gekennzeichnet, daß wobei der Koextrusionskopf (7) im Bereich seiner Rohr-Eintrittsseite (22) mit einer gegen das Rohr (8, 8') anliegenden Dichtungsanordnung (23) versehen ist.

10. Anlage nach Anspruch 8 oder 9, wobei die Vorheiz-Einrichtung (19) im Bereich der Rohr-Eintrittsseite (22) des Koextrusionskopfes (7) angeordnet ist.

11. Anlage nach einem der Ansprüche 8 bis 10, dadurch gekennzeichnet, daß dem Koextrusionskopf (7) mindestens ein Kühlbad (11, 12) nachgeordnet ist.

## Claims

1. A method for the production of a multilayer pipe (10) of thermoplastic material, in particular polyolefin, comprising the following steps:
- producing, in a direction of production (9), a pipe (8, 8') of externally profiled shape;
- coextruding a tube (46) of plastic material on to the outer surfaces (45, 51) of the pipe (8, 8') of externally profiled shape;
- welding together the tube (46) and the outer surfaces (45, 51); and
- cooling the multilayer pipe (10, 10'),
characterized in that
prior to coextruding a tube (46) of plastic material on to the outer surfaces (45, 51) of the pipe (8, 8') of externally profiled shape, at least the outer surfaces (45, 51) of the externally profiled shape are heated to welding temperature;
in that the outside of the pipe (8, 8') is acted upon by - referred to ambient pressure - partial vacuum;
in that welding together the tube (46) and the outer surfaces (45, 51) takes place under the difference pressure between ambient pressure and partial vacuum.

2. A method according to claim 1, characterized in that the pipe (8, 8') has at least predominantly smooth-wall sections (49, 49') between sections of externally profiled shape, and in that the tube (46) is welded on these sections (49, 49') substantially over the full surface.

3. A method according to claim 1 or 2, characterized in that a twin-wall pipe (8) is produced, having a smooth inside pipe (43) and a corrugated outer pipe (44) welded on the latter, and in that the tube (46) is welded on the outer surfaces (45) of the corrugated pipe (44).

4. A method according to claim 1 or 2, characterized in that a ribbed pipe (8') is produced, having ribs (52) that project radially outwards, and in that the tube (46) and the radially outer surfaces (51) of the ribs (52) are welded together.

5. A method according to one of claims 1 to 4, characterized in that the multilayer pipe (10, 10') is cooled by cooling air.

6. A method according to one of claims 1 to 5, characterized in that the multilayer pipe (10, 10') is cooled by cooling water.

7. A method according to one of claims 2 to 6, characterized in that a smooth-wall section (49, 49') is expanded to form a socket (50).

8. An installation for the production of a multilayer pipe according to the method according to one of claims 1 to 7, comprising the following features:
- an extrusion equipment (1) for extruding at least one tube (46) in a direction of production (9);
- a calibrating arrangement (5) for forming a pipe (8, 8') of externally profiled shape; and
- a coextruding head (7) having an extruder (16) for coextruding a tube (46) around the pipe (8, 8'),
characterized in that
a preheater (19) is provided for heating to welding temperature the outer surfaces (45, 51) of the externally profiled shape; and
in that the coextruding head (7) has a partial vacuum connecting line (39).

9. An installation according to claim 8, characterized in that the coextruding head (7), in the vicinity of its pipe inlet side (22), is provided with a sealing arrangement (23) bearing against the pipe (8, 8').

10. An installation according to claim 8 or 9, wherein the preheater (19) is disposed in the vicinity of the pipe inlet side (22) of the coextruding head (7).

11. An installation according to one of claims 8 to 10, characterized in that at least one cooling bath (11, 12) is disposed downstream of the coextruding head (7).

## Revendications

1. Procédé pour fabriquer un tube multicouche (10) formé d'une matière thermoplastique, notamment d'une polyoléfine, présentant les étapes opératoires suivantes :
- fabrication d'un tube (8, 8') possédant un profil extérieur, dans une direction de fabrication (9) ;
- coextrusion d'un tuyau (46) en matière plastique sur les surfaces extérieures (45,51) du profil extérieur du tube (8, 8') ;
- soudage du tuyau (46) aux surfaces extérieures (45, 51) ; et
- refroidissement du tube multicouche (10, 10'),
caractérisé en ce
qu'avant la coextrusion d'un tuyau (46) en matière plastique sur les surfaces (45, 51) du profil extérieur du tube (8, 8'), on chauffe au moins les surfaces extérieures (45, 51) du profit extérieur à la température de soudage,
qu'on charge la face extérieure du tube (8, 8') avec un vide partiel - rapporté à la pression ambiante -, et
que le soudage du tuyau (46) sur les surfaces extérieures (45, 51) est réalisé avec une pression différentielle comprise entre la pression ambiante et le vide partiel.

2. Procédé selon la revendication 1, caractérisé en ce qu'entre des sections pourvues d'un profit extérieur, le tube (8, 8') possède au moins des sections (49, 49') au moins dans une large mesure à paroi lisse, et que le tuyau (46) est soudé sur ces sections (49, 49') essentiellement sur toute leur surface.

3. Procédé selon la revendication 1 ou 2, caractérisé en ce qu'on fabrique un tube composite (8) avec un tube intérieur lisse (43) et un tube extérieur ondulé (44) soudé au précédent et qu'on soude le tuyau (46) sur les surfaces extérieures (45) du tube ondulé (44).

4. Procédé selon la revendication 1 ou 2, caractérisé en ce qu'on forme un tube à nervures (8') possédant des nervures (56) qui font saillie radialement vers l'extérieur et qu'on soude le tuyau (46) sur les surfaces extérieures (52), situées radialement à l'extérieur, des nervures (52).

5. Procédé selon l'une des revendications 1 à 4, caractérisé en ce qu'on refroidit le tube multicouche (10, 10') avec un air de refroidissement.

6. Procédé selon l'une des revendications 1 à 5, caractérisé en ce qu'on refroidit le tube multicouche (10, 10') avec une eau de refroidissement.

7. Procédé selon l'une des revendications 2 à 6, caractérisé en ce qu'on élargit la section à paroi lisse (49, 49') pour former un manchon (50).

8. Installation pour fabriquer un tube multicouche conformément au procédé selon l'une des revendications 1 à 7, présentant les caractéristiques suivantes :
- une installation d'extrusion (1) pour extruder au moins un tuyau (46) dans une direction de fabrication (9) ;
- un dispositif de calibrage (5) pour former un tube (8, 8') avec un profil extérieur ; et
- une tête de coextrusion (7) comportant une extrudeuse (16) servant à coextruder un tuyau (46) autour du tube (8, 8'),
caractérisée en ce
qu'il est prévu un dispositif de préchauffage (19) servant à chauffer les surfaces extérieures (45, 51) du profil extérieur à la température de soudage, et
que la tête de coextrusion (7) possède un raccord pour vide partiel (39).

9. Installation selon la revendication 8, caractérisée en ce que la tête de coextrusion (7) comporte, dans la zone de son côté entrée (22) dans le tube, un dispositif d'étanchéité (23) s'appliquant contre le tube (8, 8').

10. Installation selon la revendication 8 ou 9, dans laquelle le dispositif de préchauffage (19) est disposé dans la zone du côté entrée (22) pour le tube, de la tête d'extrusion (7).

11. Installation selon l'une des revendications 8 à 10, caractérisée en ce qu'un bain de refroidissement (11, 12) est disposé en aval de la tête de coextrusion (7).
